# EUROPEAN PATENT APPLICATION

(11) **EP 4 576 342 A1**
(43) Date of publication of application: **25.06.2025**
(21) Application number: 24832293.5
(22) Date of filing: 31.05.2024
(51) Int. Cl.: H01M 10/658, H01M 10/654, H01M 10/04

(54) **WELDING HEAT-SHIELDING MEMBER, ELECTRODE ASSEMBLY DAMAGE PREVENTION STRUCTURE USING SAME, AND BATTERY CELL USING SAME**

(30) Priority: 27.06.2023 KR 20230083012; 28.05.2024 KR 20240069583
(71) Applicant: LG Energy Solution, Ltd., Seoul 07335 (KR)
(72) Inventor: CHO, Sungmin, Daejeon 34122 (KR); PARK, Jeongho, Daejeon 34122 (KR); HWANG, Dongsung, Daejeon 34122 (KR); HONG, Taerim, Daejeon 34122 (KR)
(74) Representative: Goddar, Heinz J.
(86) International application number: PCT/KR2024/007517
(87) International publication number: WO 2025/005511

(57) **Abstract**

Disclosed is a battery cell, which comprises a can including a bottom member and a sidewall member, and a cap covering an opening of the can, and an electrode assembly accommodated inside the can. A current collection plate is connected to an electrode tab provided at a second end located at the open end of the can among first and second ends located at both axial sides of the electrode assembly. The current collection plate includes an electrode tab connection portion that is in contact with the electrode tab and electrically connected to the electrode tab; a can connection portion that is provided outside the electrode tab connection portion in a radial direction and is in contact with the can and electrically connected to the can; and a conductive connection portion that electrically connects the can connection portion and the electrode tab connection portion. A periphery of the one end of the sidewall member and an outer periphery of the cap in the radial direction are seam-welded along a peripheral direction, and at least a part of an insulating member is interposed between the current collection plate and the electrode assembly in the axial direction.

## Description

### TECHNICAL FIELD

This application is based on and claims priority from Korean Patent Application No. 10-2023-0083012, filed on June 27, 2023, and Korean Patent Application No. 10-2024-0069583, filed on May 28, 2024, with the Korean Intellectual Property Office, the disclosure of which is incorporated herein in its entirety by reference.

The present disclosure relates to a welding heat shield member applied to prevent welding heat generated during the welding process of a battery can, a current collection plate, and a cap from damaging a separator of an electrode assembly, an electrode assembly damage prevention structure using the same, and a battery cell using the same.

### BACKGROUND ART

The process of manufacturing a battery cell using a cylindrical can includes the steps of deeply drawing a metal sheet to form a circular bottom portion and a circular tubular sidewall member connected thereto, accommodating an electrode assembly therein, and then covering the open end of the sidewall member with a cap or lid to finish the process. For convenience of explanation, hereinafter, the cap or lid is referred to as a cap.

Meanwhile, at the end facing the open end among the ends in the axial direction of the electrode assembly, a current collection plate is provided to be in contact with and electrically connected to the electrode tab of the electrode assembly. The current collection plate is connected to the cap or the sidewall member by welding or the like so as to be in contact with and electrically connected to the cap or the sidewall member.

Cylindrical lithium ion batteries require excellent sealing to prevent performance degradation due to electrolyte leakage and ignition due to contact with air or moisture. To this end, seam welding using a laser is being developed during the assembly process of the cylindrical can and the cap.

Laser seam welding technology is known to secure excellent sealing and mechanical strength by melting and coupling the can and the cap using a laser. However, since the laser is a heat source with high energy density, the welding heat may be transferred outside the welding portion during welding. As a result, there is a possibility that other parts around the welding portion may be damaged by the welding heat.

In particular, the separator of the electrode assembly made of a microporous polymer film is more likely to be damaged by heat, such as deformation, loss, and melting, compared to steel, aluminum, and copper materials that make up the electrode assembly or other parts. However, if a low energy density laser is used to prevent this, there is a concern that the width and penetration depth of the welding bead will decrease, which may lower the sealing property and mechanical strength of the welding portion. In other words, the possibility of separator damage due to laser output and the sealing property tend to be a trade-off.

These characteristics make it difficult to optimize the laser process parameters. In addition, the process window may be narrowed during mass production, potentially reducing the production yield of the product.

Therefore, a method is required to prevent damage to the separator caused by welding heat while using a high energy density laser during laser seam welding.

### DISCLOSURE

### Technical Problem

The present disclosure is designed to solve the problems of the related art, and therefore the present disclosure is directed to providing a method to prevent welding heat generated during a seam welding process of a battery can from damaging surrounding components.

The present disclosure is directed to providing a method for performing seam welding to a battery can using a high energy density laser to ensure welding quality while preventing the welding heat generated thereby from damaging surrounding components.

The present disclosure is directed to providing a method to increase yield by expanding the process window for performing seam welding to a battery can.

The present disclosure is directed to providing a method to secure the margin of the laser seam welding process for a battery can.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The present disclosure to accomplish the above object may be applied to a battery cell, which includes an electrode assembly, a current collection plate electrically connected to the electrode assembly, and a can accommodating the electrode assembly and the current collection plate.

The can includes a bottom member, a sidewall member connected to the bottom member and extending to one side in an axial direction, and a cap covering an open end provided at one axial end of the sidewall member.

A periphery of the one end of the sidewall member and an outer periphery of the cap in the radial direction may be seam-welded along a peripheral direction.

The electrode assembly may have a jelly-roll form wound around a predetermined axial periphery.

An electrode tab may be provided at an end facing the open end among both axial ends of the electrode assembly, and the current collection plate may be connected to the electrode tab.

The current collection plate may include an electrode tab connection portion that is in contact with the electrode tab and electrically connected to the electrode tab.

The current collection plate may include a can connection portion that is in contact with the can and electrically connected to the can.

The current collection plate may include a conductive connection portion that is provided between the can connection portion and the electrode tab connection portion and connects the can connection portion and the electrode tab connection portion.

The can connection portion and the electrode tab connection portion may be electrically connected to each other by the conductive connection portion.

The current collection plate may include an inner ring.

The inner ring may define a hole facing a winding center hollow of the electrode assembly.

The current collection plate may further include an outer ring provided outside the inner ring in the radial direction and extending to surround the inner ring.

The current collection plate may further include at least one first spoke and at least one second spoke connected to the inner ring and extending outwardly in the radial direction from the inner ring.

The first spoke may extend outwardly in the radial direction from a first position of the inner ring in a peripheral direction.

The second spoke may extend outwardly in the radial direction from a second position in the peripheral direction of the inner ring that does not overlap the first position.

The first spoke and the second spoke may be spaced apart from each other in the peripheral direction.

The outer ring may be spaced apart from the first spoke and connected to the second spoke.

The outer ring may be disposed outwardly in the radial direction from a radial outer end of the first spoke.

The outer ring may be connected to a radial outer end of the second spoke.

The inner ring may be a closed loop shape or an open loop shape.

The outer ring may be a closed loop shape or an open loop shape.

Preferably, the outer ring may have a closed loop shape.

The electrode tab connection portion may be disposed at least on the first spoke.

The electrode tab connection portion may also be disposed at the first position of the inner ring in the peripheral direction.

The can connection portion may be disposed on the outer ring.

The conductive connection portion may be disposed at least on the second spoke.

The conductive connection portion may also be disposed at a second position in the peripheral direction of the inner ring.

The conductive connection portion may be further disposed at a third position, which is arranged between the first position and the second position in the peripheral direction of the inner ring.

The conductive connection portion may be further disposed at the first position in the peripheral direction of the inner ring.

The battery cell includes an insulating member that prevents heat generated while seam-welding the sidewall member and the cap from being transferred to the electrode assembly.

At least a part of the insulating member is interposed between the current collection plate and the electrode assembly in the axial direction.

The insulating member may be disposed to extend out of a space between the electrode tab connection portion and the electrode assembly in the axial direction.

The insulating member may be disposed to extend out of a space between the first spoke and the electrode assembly in the axial direction.

By an avoidance groove provided in the insulating member, the insulating member may not be interposed between the electrode tab connection portion and the electrode assembly in the axial direction.

At least a part of the insulating member may be disposed between the can connection portion and the electrode assembly in the axial direction.

At least a part of the insulating member may be disposed between the outer ring and the electrode assembly in the axial direction.

At least a part of the insulating member may be disposed between the second spoke and the electrode assembly in the axial direction.

At least a part of the insulating member may be disposed between the second position in the peripheral direction of the inner ring and the electrode assembly in the axial direction.

At least a part of the insulating member may be disposed between the third position in the peripheral direction of the inner ring and the electrode assembly in the axial direction.

At least a part of the insulating member may be disposed between the first position in the peripheral direction of the inner ring and the electrode assembly in the axial direction.

At least a part of the insulating member may be disposed outside the electrode tab connection portion in the radial direction.

At least a part of the insulating member may be disposed outside the first spoke in the radial direction.

At least a part of the insulating member may be disposed between two electrode tab connection portions adjacent in the peripheral direction.

At least a part of the insulating member may be disposed between the first spokes in the peripheral direction.

The insulating member may cover a space between the electrode tab connection portion and the can connection portion in the radial direction.

The insulating member may cover a space between the first spoke and the outer ring in the radial direction.

The insulating member may cover a space between the inner ring and the outer ring in the radial direction.

The insulating member may cover a space between the electrode tab connection portion and the conductive connection portion in the peripheral direction.

The insulating member may cover a space between the first spoke and the second spoke in the peripheral direction.

The insulating member may cover a separation space between the electrode tab connection portion and the can connection portion in the radial direction and/or the peripheral direction.

The insulating member may include a high heat-resistant polymer material.

The insulating member may be a material that is substantially non-reactive with an electrolyte.

The insulating member may be substantially chemically stable with respect to the electrolyte injected into the can.

The insulating member may include at least one of polycarbonate (PC), polyethylene naphthalate (PEN), polyether ether ketone (PEEK), and polyethylene terephthalate (PET).

The can connection portion or the outer ring may include a first region contacting the sidewall member and a second region contacting the cap.

The first region and the sidewall member may be bonded by welding.

The second region and the cap may be bonded by welding.

The first region and the second region may be welded at one time.

The welding may be laser welding.

The first region may be the can connection portion or the outer circumference of the outer ring, which faces and contacts an inner circumference of the sidewall member in the radial direction.

The second region may be an outer surface in the axial direction of the outer ring that faces and contacts an inner surface in the axial direction of the cap in the axial direction.

The cap may include an outer circumference that faces and contacts the inner circumference of the sidewall member in the radial direction.

The battery cell may include a welding portion in which the inner circumference of the sidewall member, the outer circumference of the cap, and the can connection portion of the current collection plate, or the first region and the second region of the outer ring, are welded together.

The outer circumference of the cap and the can connection portion or the outer circumference of the outer ring may each contact the inner circumference of the sidewall member.

Axial ends of the outer circumference of the cap and the inner circumference of the sidewall member, which face each other in the radial direction, may be exposed outside the axial direction.

The welding portion may be formed by a laser irradiated from an outer side of the battery cell in the axial direction to the axial ends of the outer circumference of the cap and the inner circumference of the sidewall member.

Thermal conductivity of the current collection plate may be higher than thermal conductivity of the sidewall member. Accordingly, the welding heat may be distributed to the electrode assembly through the current collection plate.

As the welding heat is conducted through the current collection plate, the temperature may gradually decrease. Accordingly, it is preferable that the insulating member is interposed between the current collection plate and the electrode assembly in at least a portion corresponding to the initial path along which the welding heat is conducted.

The position where the welding heat is first conducted in the current collection plate may be the outer ring. The welding heat may be conducted in the order of the outer ring, the second spoke, the inner ring, and the first spoke in the current collection plate, or in the order of the can connection portion, the conductive connection portion, and the electrode tab connection portion.

Accordingly, the insulating member may be disposed at least between the can connection portion or the outer ring of the current collection plate and the electrode assembly. Preferably, the insulating member may be further disposed between the conductive connection portion or the second spoke of the current collection plate and the electrode assembly.

Additionally, the insulating member may be further disposed between at least a part of the inner ring and the electrode assembly.

In addition, the welding heat may also be transferred to the electrode assembly by radiation.

Accordingly, preferably, the insulating member may cover a separation space between the electrode tab connection portion and the can connection portion, or a separation space between the outer ring and the inner ring and the first spoke and the second spoke, in the radial direction and/or the peripheral direction. Specifically, the insulating member may cover the electrode assembly so that the electrode assembly is not exposed through the separation space.

Laser seam welding may be performed in a circumferential direction along the edge of the current collection plate. Accordingly, preferably, the insulating member may include a ring shape extending inwardly in the radial direction from the edge of the current collection plate by a predetermined distance.

At this time, the insulating member may have a shape in which at least a portion corresponding to the electrode tab connection portion or the first spoke of the current collection plate is deleted.

### Advantageous Effects

According to the present disclosure, the influence of welding heat on the electrode assembly may be minimized by applying a welding heat shield member. Accordingly, seam welding may be performed using a laser with high energy density.

According to the present disclosure, the width and penetration depth of the welding bead may be sufficiently secured while minimizing the influence of welding heat on the electrode assembly. Accordingly, the sealing ability and mechanical strength of the welding portion may be sufficiently secured while preventing damage to the separator.

According to the present disclosure, it is easy to optimize the process variables of the laser, the process window may be widened during mass production, and the process margin may be secured to increase the production yield of the product.

In addition to the above effects, specific effects of the present disclosure will be described below while explaining the specific details for carrying out the present disclosure.

### DESCRIPTION OF DRAWINGS

FIG. 1 is a perspective view showing a cylindrical battery cell according to an embodiment.
FIG. 2 is an exploded perspective view showing an electrode assembly accommodated inside a can of FIG. 1 before winding.
FIG. 3 is a perspective view showing the electrode assembly of FIG. 2 in a stacked state before winding.
FIG. 4 is a perspective view showing an electrode assembly in a cylindrical jelly-roll form assembled by winding the stack of FIG. 3.
FIG. 5 is a perspective view showing a state in which a first current collection plate is coupled to an electrode tab of a first electrode of the electrode assembly.
FIG. 6 is a perspective view showing a process of coupling a second current collection plate to an electrode tab of a second electrode of the electrode assembly with an insulating member being interposed therebetween.
FIG. 7 is a perspective view showing a state in which a second current collection plate is coupled to the electrode tab of the second electrode of the electrode assembly with an insulating member being interposed therebetween.
FIG. 8 is a side cross-sectional view showing the process of accommodating the electrode assembly to which the current collection plate is coupled inside the can.
FIG. 9 is a side cross-sectional view showing the process of coupling the first current collection plate and the first electrode terminal of the electrode assembly accommodated in the can.
FIG. 10 is a side cross-sectional view showing the process of covering an open end of the can accommodating the electrode assembly with a cap.
FIG. 11 is a side cross-sectional view showing a state of covering the open end of the can accommodating the electrode assembly with a cap.
FIG. 12 is a side cross-sectional view showing the process of performing seam welding to the cap and a sidewall member of the can and then injecting an electrolyte through an injection hole of the cap.
FIG. 13 is a side cross-sectional view showing a state where the injection hole of the cap is sealed with a plug after the electrolyte is completely injected.

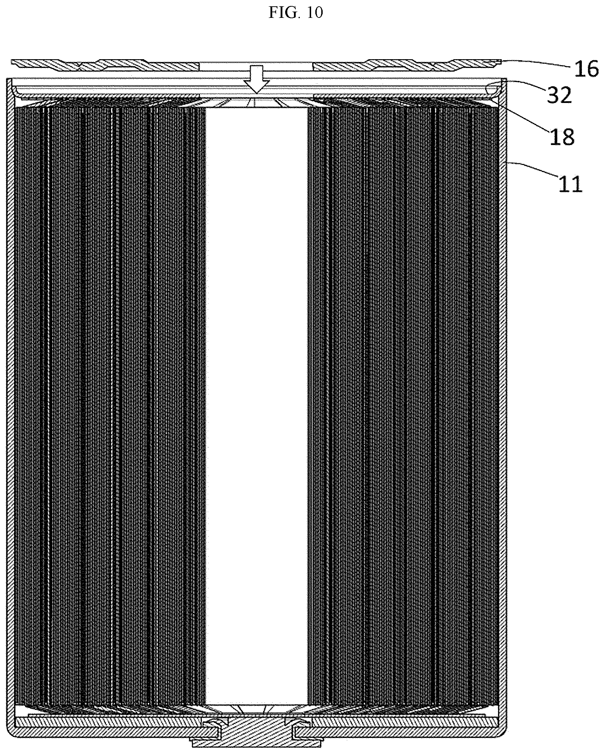

FIG. 10 is an enlarged cross-sectional view showing the open end covered with the cap of the can accommodating the electrode assembly.

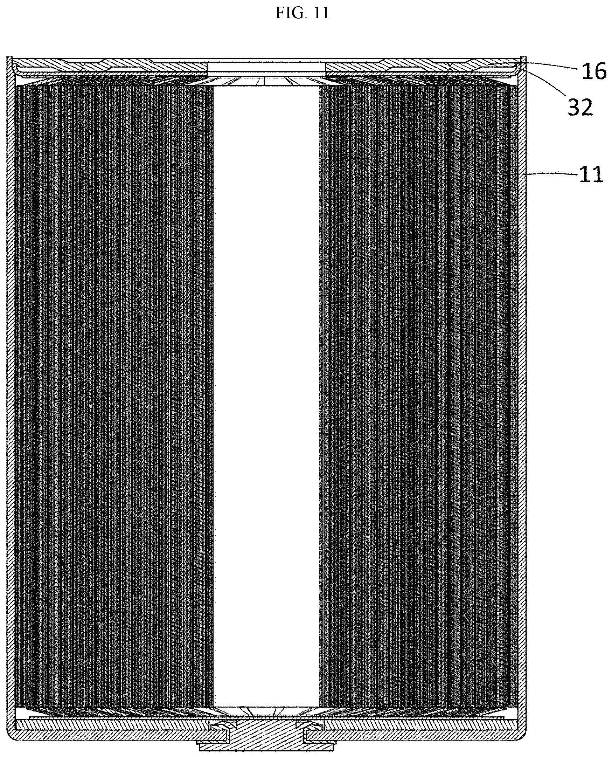

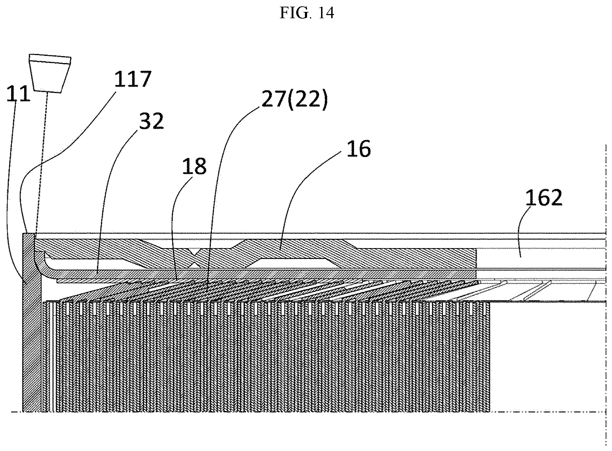

FIG. 14 is an enlarged view showing the sidewall member, the current collection plate, and the cap where welding will be performed in the battery cell of FIG. 11.

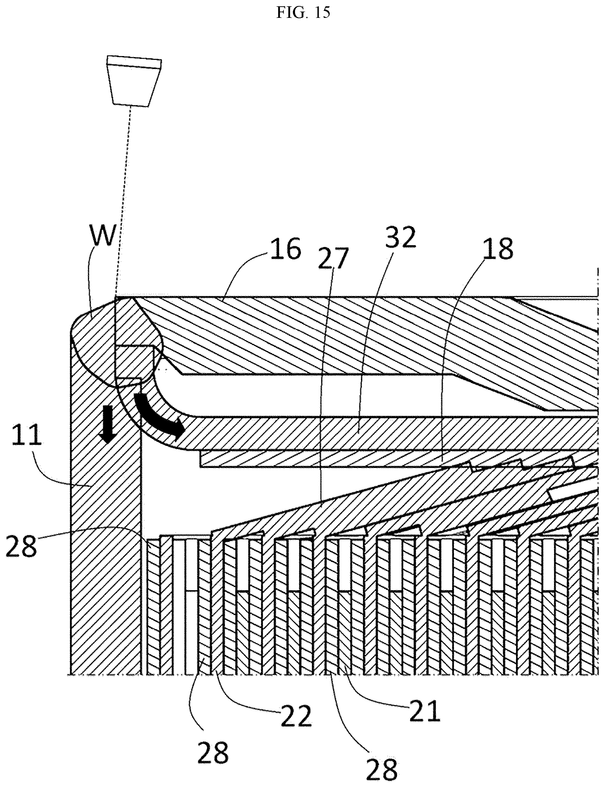

FIG. 15 is a drawing showing the process of forming a welding portion by welding the sidewall member, the current collection plate, and the cap in FIG. 14.

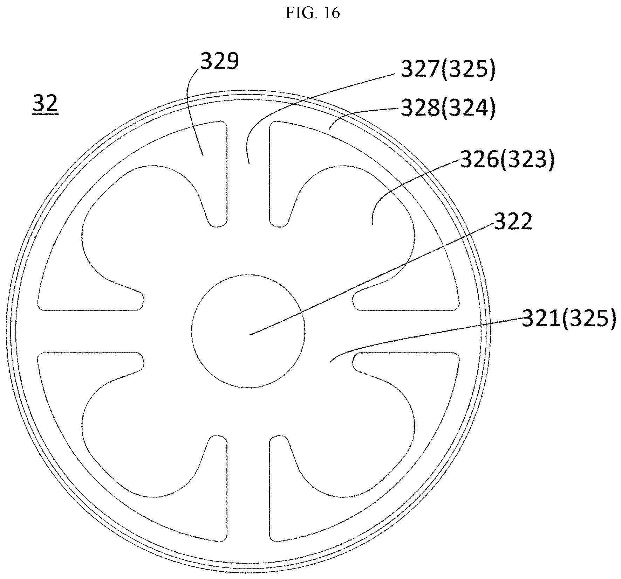

FIG. 16 is a plan view showing a second current collection plate.

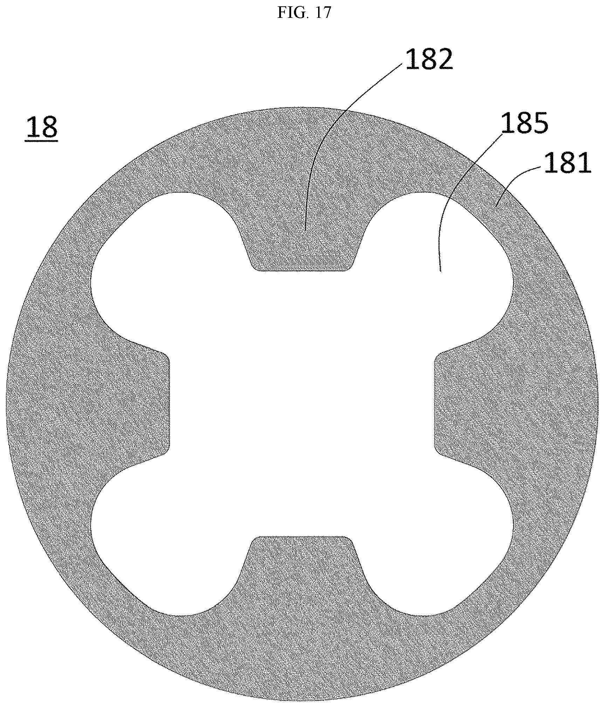

FIG. 17 is a plan view showing an insulating member.

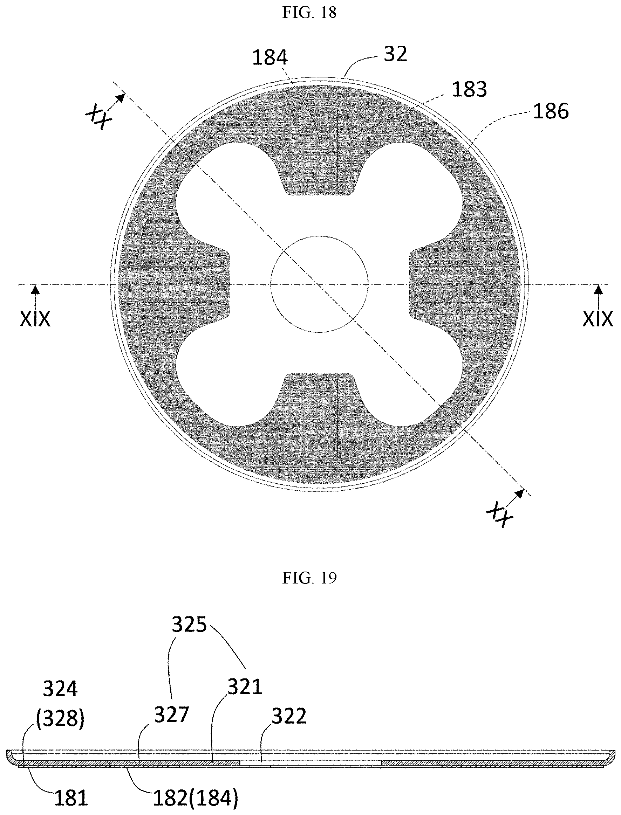

FIG. 18 is a plan view showing the insulating member overlapping the second current collection plate.
FIG. 19 is a cross-sectional view taken along line XIX-XIX of FIG. 18.

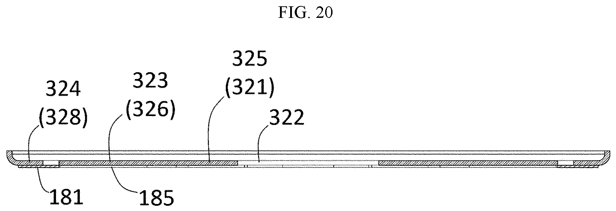

FIG. 20 is a cross-sectional view taken along line XX-XX of FIG. 18.

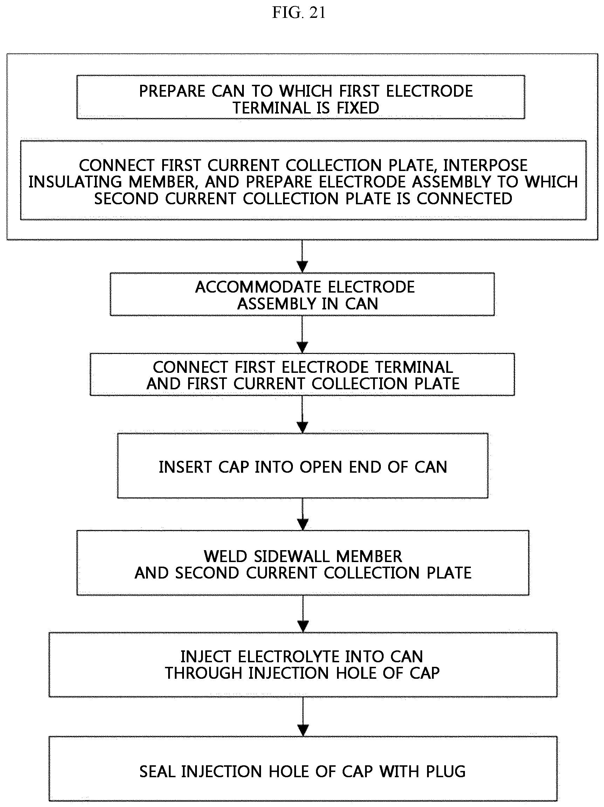

FIG. 21 is a flowchart for illustrating a battery cell manufacturing process according to an embodiment of the present disclosure.

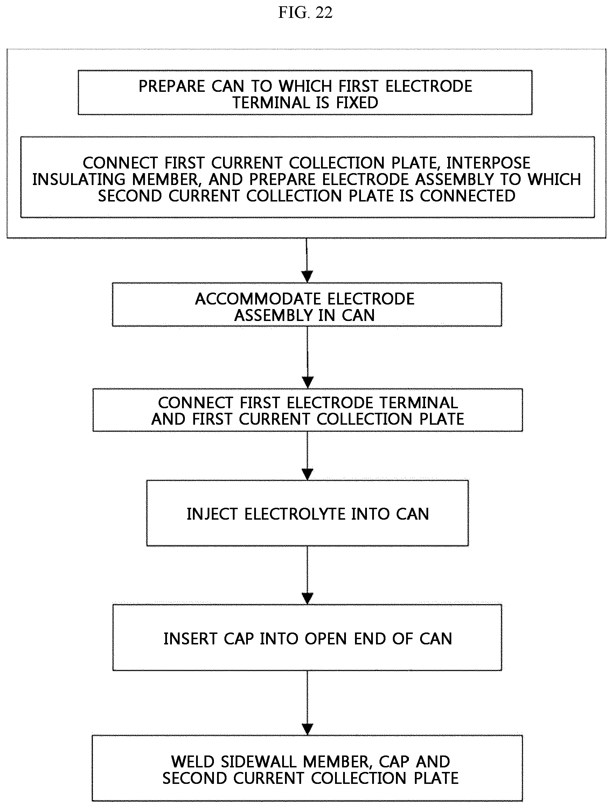

FIG. 22 is a flowchart for illustrating a battery cell manufacturing process according to a modified example of the present disclosure.

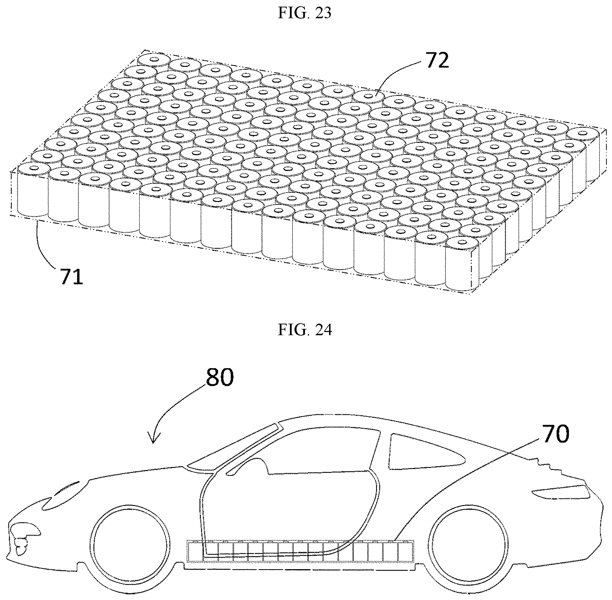

FIGS. 23 and 24 show a battery pack to which the battery cell of the embodiment is applied, and a vehicle equipped with the battery pack.

### [Reference Signs]

10: can 11: sidewall member 117: overhang portion 12: bottom member 13: first electrode terminal (positive electrode terminal) 14: gasket 15: second electrode terminal 16: cap 162: injection hole 164: plug 18: insulating member (welding heat shield member) 181: outer ring 182: centripetal extension portion 183: separation space cover portion 184: radial extension cover portion 185: avoidance groove 186: circumferential extension cover portion 19: insulator 20: electrode assembly 21: first electrode 22: second electrode 23: metal foil 24: active material layer 25: coated portion 26: uncoated portion 27: electrode tab (notching tab) 28: separator 31: first current collection plate (positive electrode current collection plate) 312: terminal connection portion 313: ring portion 314: electrode connection portion 32: second current collection plate (negative electrode current collection plate) 321: inner ring 322: hole 323: electrode tab connection portion 324: can connection portion 325: conductive connection portion 326: first spoke 327: second spoke 328: outer ring 329: separation space W: welding portion 70: battery pack 71: housing 72: battery cell 80: vehicle

### BEST MODE

The above-mentioned purpose, features and advantages are described in detail later with reference to the attached drawings, and accordingly, a person skilled in the art in the technical field to which the present disclosure belongs will be able to easily implement the technical idea of the present disclosure. When explaining the present disclosure, if it is deemed that a detailed description of the publicly known technology related to the present disclosure may unnecessarily obscure the gist of the present disclosure, the detailed explanation is omitted. Hereinafter, a preferred embodiment according to the present disclosure will be described in detail with reference to the attached drawings. In the drawings, identical reference signs are used to indicate identical or similar components.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

Hereinafter, when an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Singular expressions used in this specification include plural expressions unless the context clearly indicates otherwise. In this application, terms such as "including" or "comprising" should not be construed as necessarily including all of the various components or steps described in the specification, and it should be construed that some of the components or some of the steps may not be included, or additional components or steps may be further included.

Throughout the specification, "A and/or B" refers to either A or B or both A and B unless expressly stated otherwise, and "C to D" refers to C or greater and D or smaller unless expressly stated otherwise.

In explaining the embodiment, the axial direction refers to a direction in which the axis forming a winding center of a jelly-roll type electrode assembly extends, the radial direction refers to a direction approaching (centripetal) or moving away (centrifugal) from the axis, and the peripheral direction refers to a direction surrounding the axis.

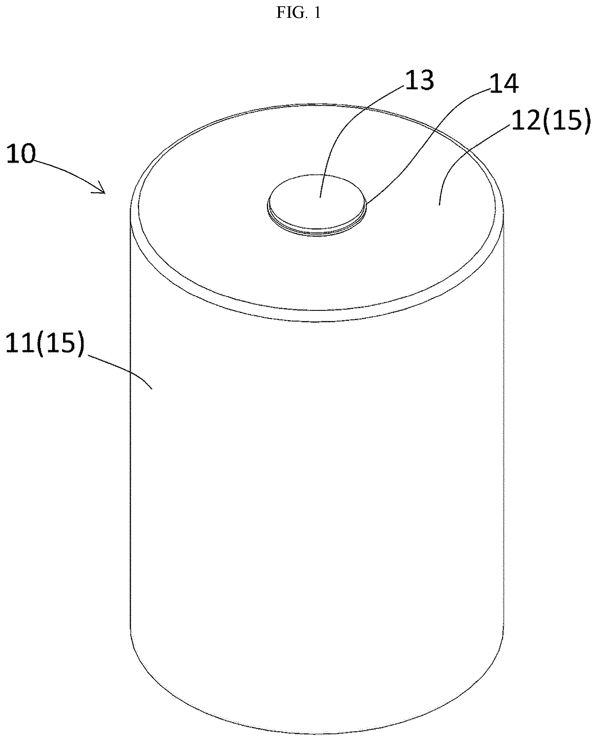

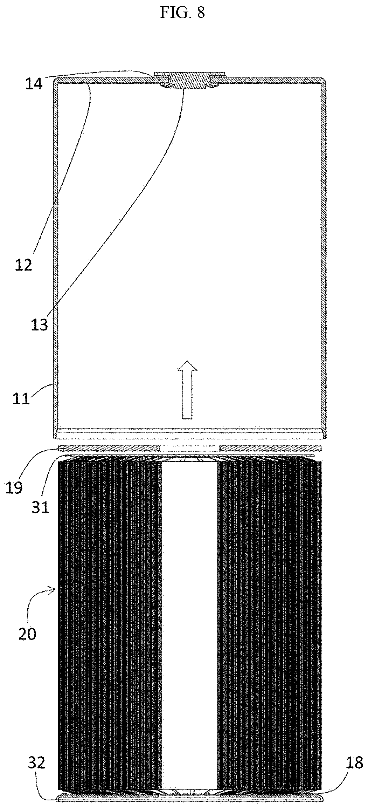

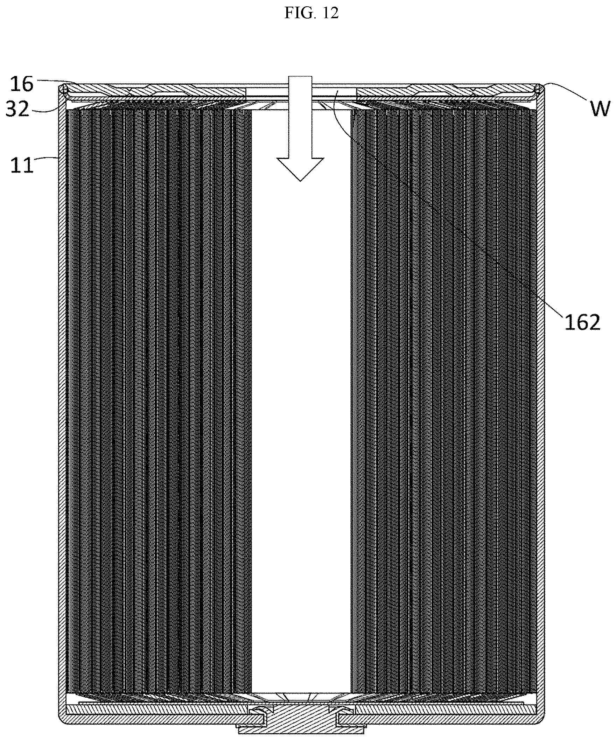

Hereinafter, referring to FIGS. 1 to 20, an embodiment of a battery cell to which a welding heat shield member, namely an insulating member, of the present disclosure is applied will be described in detail.

The battery cell of this embodiment may be, for example, a cylindrical battery whose form factor ratio (defined as a value obtained by dividing the diameter of the cylindrical battery cell by height, namely a ratio of diameter (Φ) to height (H)) is greater than about 0.4.

Here, the form factor means a value indicating the diameter and height of a cylindrical battery cell. The cylindrical battery cell may be, for example, a 46110 cell, a 48750 cell, a 48110 cell, a 48800 cell, or a 46800 cell. In the numerical value representing the form factor, the first two digits represent the diameter of the cell, the next two digits represent the height of the cell, and the last digit 0 represents that the cross-section of the cell is circular.

The battery cell may be an approximately cylindrical battery cell, whose diameter is approximately 46 mm, height is approximately 110 mm, and form factor ratio is 0.418.

A battery cell according to another embodiment may be an approximately cylindrical battery cell, whose diameter is about 48 mm, height is about 75 mm, and form factor ratio is 0.640.

A battery cell according to still another embodiment may be an approximately cylindrical battery cell, whose diameter is approximately 48 mm, height is approximately 110 mm, and form factor ratio is 0.436.

A battery cell according to still another embodiment may be an approximately cylindrical battery cell, whose diameter is approximately 48 mm, height is approximately 80 mm, and form factor ratio is 0.600.

A battery cell according to still another embodiment may be an approximately cylindrical battery cell, whose diameter is approximately 46 mm, height is approximately 80 mm, and form factor ratio is 0.575.

The present disclosure may be applied to battery cells having a form factor ratio of approximately 0.4 or less, such as an 18650 cell, a 21700 cell, etc. The 18650 cell has a diameter of approximately 18 mm, a height of approximately 65 mm, and a form factor ratio of 0.277. The 21700 cell has a diameter of approximately 21 mm, a height of approximately 70 mm, and a form factor ratio of 0.300.

The battery cell according to this embodiment includes an electrode assembly 20, current collection plates 31, 32 electrically connected to the electrode assembly 20, and a can 10 accommodating the electrode assembly 20 and the current collection plates 31, 32.

The can 10 includes a bottom member 12, a sidewall member 11 connected to the bottom member 12 and extending in the axial direction, and a cap 16 covering an open end provided at one end of the sidewall member 11 in the axial direction.

The bottom member 12 may have a disc shape with a hole formed in the center, and the sidewall member 11 may have a circular tube shape.

The bottom member 12 and the sidewall member 11 may be manufactured by forming a nickel-plated metal sheet on the surface of steel through a deep drawing process, and trimming the front end of the sidewall member 11 with a punch while holding it with a blank holder. Of course, the material of the can 10 is not limited thereto.

A first electrode terminal 13 may be fitted into the hole. The first electrode terminal 13 may be riveted and fixed to the bottom member 12 with a gasket 14 being interposed therebetween. The gasket 14 is interposed between the first electrode terminal 13 and the bottom member 12 to seal the inside and the outside of the can 10, thereby preventing leakage of electrolyte and electrically insulating the first electrode terminal 13 and the bottom member 12.

However, the connection method between the first electrode terminal 13 and the bottom member 12 is not limited thereto. For example, various other fixing methods, such as a bolt-nutjoint method, a glass seal method, or a chrome coating & PP-MAH heat bonding method, may also be applied as long as the structure may seal the first electrode terminal 13 and the bottom member 12 to each other and electrically insulate the first electrode terminal 13 and the bottom member 12.

The first electrode terminal 13 may have first polarity, and the can 10 may have second polarity. That is, the bottom member 12 of the can 10, the sidewall member 11 connected thereto, and the cap 16, explained later, connected to the sidewall member 11 may all have second polarity.

Accordingly, in the battery cell, both the first electrode terminal 13 and the second electrode terminal 15 may be disposed at the end in the axial direction, namely the closed end, provided with the bottom member 12. Then, in the battery cell, both the bus bar connected to the first electrode terminal 13 and the bus bar connected to the second electrode terminal 15 may be positioned at the upper portion of the battery cell.

In one example, the first electrode terminal 13 may be a positive electrode terminal, and the second electrode terminal 15 may be a negative electrode terminal, or vice versa.

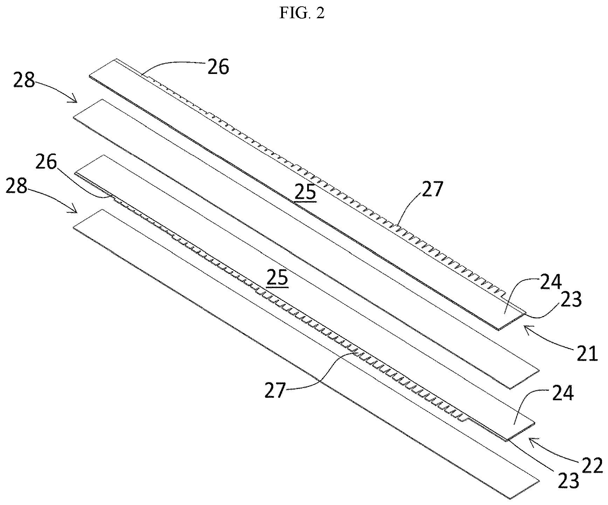

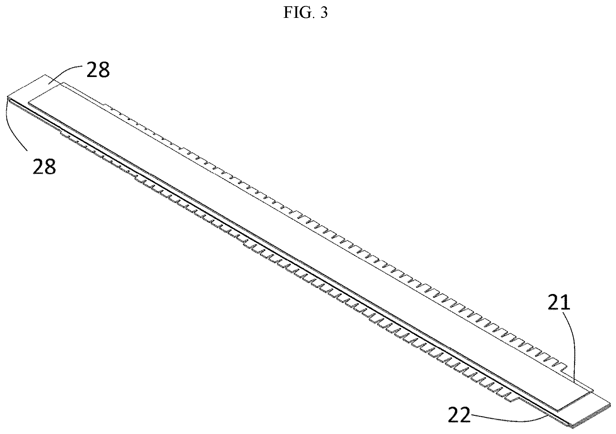

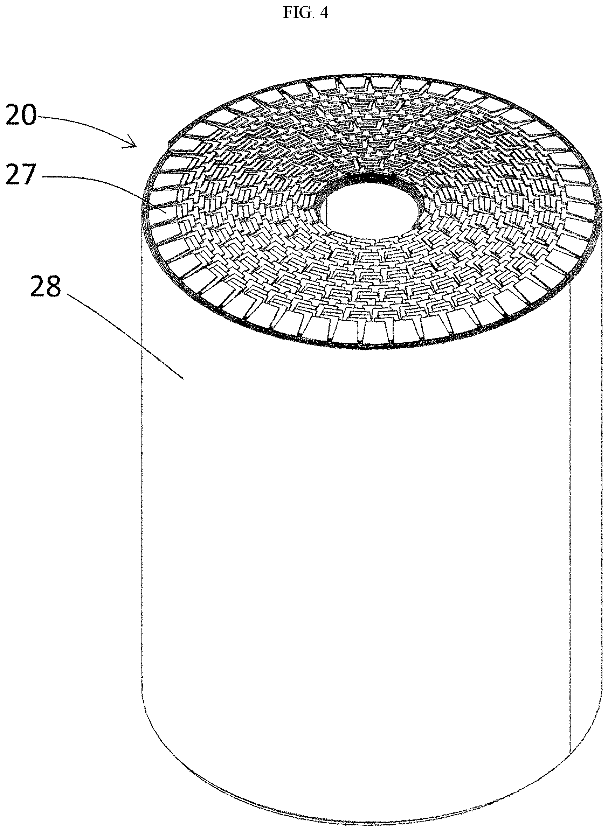

The electrode assembly 20 is accommodated in the can 10. The electrode assembly 20 is manufactured in a jelly-roll shape by preparing a first electrode 21, a second electrode 22, and a separator 28 that are extended in the longitudinal direction with a predetermined width as illustrated in FIG. 2, forming a stack in which the first electrode 21, the separator 28, the second electrode 22, and the separator 28 are sequentially stacked in order as illustrated in FIG. 3, and then winding the stack around a winding center axis as illustrated in FIG. 4.

The first electrode 21 may be a positive electrode, and the second electrode 22 may be a negative electrode, or vice versa.

The first electrode 21 and the second electrode 22 are manufactured in a sheet form. The electrode sheet is manufactured in a form where an active material layer 24 is coated on the surface of a metal foil 23. The electrode sheet has a coated portion 25 where the active material layer 24 is coated and an uncoated portion 26 where the active material layer 24 is not coated. The positive electrode sheet has an uncoated portion 26 at one side in the width direction, and the negative electrode sheet has an uncoated portion 26 at the other side in the width direction.

The uncoated portion 26 is exposed or protrudes in the width direction in the stack. The uncoated portion 26 itself functions as an electrode tab 27.

The uncoated portion 26 may be notched at predetermined intervals to form notching tabs 27 in a flag shape.

In the embodiment, the notching tabs 27 are illustrated as having an equilateral trapezoid shape. However, the shape may be various, such as a semicircle, a semi-ellipse, a triangle, a rectangle, a parallelogram, etc.

Also, in the embodiment, the notching tabs 27 arranged along the longitudinal direction are exemplified as having the same width. However, the width of the notching tabs may be gradually or stepwise increased from the winding center toward the outer circumference.

In addition, in the embodiment, the height of the notching tabs 27 is gradually increased from the winding center toward the outer circumference. However, the height of these notching tabs may be implemented in a constant or gradually decreasing form.

Also, in the embodiment, a structure is exemplified in which the notching tab 27 is deleted in a predetermined section at the centripetal end of the uncoated portion 26 and a predetermined section at the centrifugal end thereof. However, it is of course possible that the notching tab is not deleted at the centripetal end of the uncoated portion, and that the notching tab is not deleted at the centrifugal end of the uncoated portion.

In the electrode assembly 20 in a jelly-roll form, the notching tab 27 may be bent and flattened in the radial direction as illustrated in FIG. 4. The notching tab 27 may be bent inwardly or outwardly in the radial direction. In the embodiment, a structure in which the notching tab 27 is bent inwardly in the radial direction is exemplified.

The notching tab 27 may be bent one by one during the process of forming a jelly-roll type electrode assembly 20 by winding the stack. Alternatively, the notching tab 27 may be bent at once after forming a jelly-roll type electrode assembly by winding the stack.

The notching tabs 27 of the first electrode 21 and the notching tabs 27 of the second electrode 22, which are bent and overlapped in the radial direction as above, may provide a plane substantially perpendicular to the axial direction at both axial ends of the electrode assembly 20.

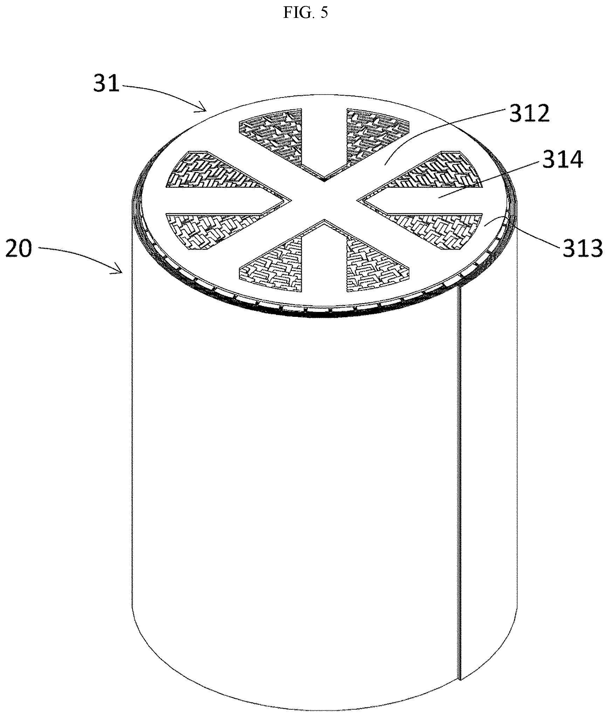

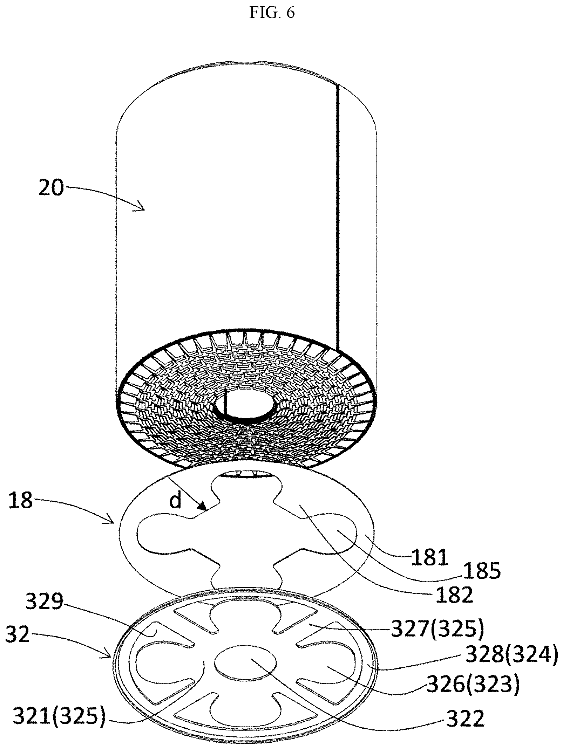

The substantially flat surface provided by bending the notching tab 27 exposed at both ends in the axial direction of the electrode assembly 20 may be coupled with the first current collection plate 31 and the second current collection plate 32, as shown in FIGS. 5 and 6, respectively.

In the embodiment, it is exemplified that the first current collection plate 31 is a positive electrode current collection plate, and the second current collection plate 32 is a negative electrode current collection plate. The first current collection plate 31 may be made of aluminum, and the second current collection plate 32 may be made of copper.

The current collection plate 31, 32 may be manufactured by punching, trimming, piercing or bending a metal sheet.

Referring to FIG. 5, the first current collection plate 31 has a terminal connection portion 312 extending radially from the center, a ring portion 313 connecting a centrifugal edge of the terminal connection portion 312 in the circumferential direction, and an electrode connection portion 314 extending centripetally from the ring portion 313 but not connected to the terminal connection portion 312. The center of the terminal connection portion 312 covers at least a part of the winding center hollow of the electrode assembly 20.

The electrode connection portion 314 is bonded to the notching tab 27 of the first electrode 21 of the electrode assembly 20 by laser welding or the like before inserting the electrode assembly 20 into the can 10. The welding line of the laser may extend radially.

Referring to FIGS. 6, 7, and 16, the second current collection plate 32 includes an inner ring 321 defining a hole 322 corresponding to the winding center hollow of the electrode assembly 20 and provided to surround the winding center hollow, a first spoke 326 extending radially from the inner ring 321, a second spoke 327 extending radially from the inner ring 321, and an outer ring 328 disposed centrifugally relative to the first spoke 326 and connected to a centrifugal end of the second spoke 327. The first spoke 326 and the second spoke 327 are respectively connected to different positions of the inner ring 321 in the peripheral direction, namely the first position and the second position. In addition, the first spoke 326 and the second spoke 327 are spaced apart from each other in the peripheral direction. Also, the outer ring 328 is concentric with the inner ring 321 and is spaced radially outward from the inner ring 321 and the first spoke 326.

The embodiment illustrates that both the inner ring 321 and the outer ring 328 have a closed loop shape, but the shape is not necessarily limited thereto. For example, the inner ring 321 may have a "C" shape, and the outer ring 328 may have a plurality of arc shapes that are formed intermittently and arranged along the peripheral direction.

The second current collection plate 32 includes an electrode tab connection portion 323 that is in contact with and electrically connected to the electrode tab 27 of the second electrode 22 of the electrode assembly 20, a can connection portion 324 that is in contact with and electrically connected to the can 10, and a conductive connection portion 325 that electrically connects the electrode tab connection portion 323 and the can connection portion 324 to each other.

According to the embodiment, the electrode tab connection portion 323 is illustrated as being arranged on the first spoke 326, but the arrangement of the electrode tab connection portion 323 is not limited thereto. For example, the electrode tab connection portion 323 may be further arranged on the inner ring 321, specifically on the first position in the peripheral direction thereof.

According to the embodiment, the can connection portion 324 is illustrated as being disposed on the outer ring 328. Although the embodiment exemplifies that the can connection portion 324 is disposed entirely along the peripheral direction of the outer ring 328, the can connection portion 324 is not necessarily disposed entirely along the peripheral direction. For example, the can connection portion 324 may be discontinuously disposed along the peripheral direction of the outer ring 328.

According to the embodiment, the conductive connection portion 325 is disposed on the second spoke 327. However, the conductive connection portion 325 may be disposed further on the inner ring 321, specifically at the second position in the peripheral direction, or may be arranged further at the third position between the first position and the second position in the peripheral direction, complementary to the arrangement of the electrode tab connection portion 323.

In the embodiment, four first spokes 326 and four second spokes 327 are provided alternately at 90-degree intervals. That is, the spokes 326 and 327 may be arranged at 45-degree intervals. Meanwhile, accordingly, four electrode tab connection portions 323 are provided at 90-degree intervals.

The can connection portion 324 is disposed more externally in the radial direction than the electrode tab connection portion 323.

The electrode tab connection portion 323 and the can connection portion 324 are arranged to be spaced apart from each other in the radial direction. Also, the electrode tab connection portion 323 and the conductive connection portion 325 are arranged to be spaced apart from each other in the circumferential direction. Specifically, the first spoke 326 and the outer ring 328 are arranged to be spaced apart from each other in the radial direction, and the first spoke 326 and the second spoke 327 are arranged to be spaced apart from each other in the circumferential direction.

This separation region may define a "U" shaped separation space 329.

Accordingly, the current movement path in the second current collection plate 32 may be in the order of the electrode tab connection portion 323, the conductive connection portion 325, and the can connection portion 324, or in the order of the first spoke 326, the inner ring 321, the second spoke 327, and the outer ring 328, or in the reverse order.

Similarly, the movement path of welding heat due to conduction in the second current collection plate 32 may be in the order of the can connection portion 324, the conductive connection portion 325, and the electrode tab connection portion 323, or in the order of the outer ring 328, the second spoke 327, the inner ring 321, and the first spoke 326.

The electrode tab connection portion 323 of the second current collection plate 32 may be bonded to the notching tab 27 of the second electrode 22 of the electrode assembly 20 by laser welding or the like before putting the electrode assembly 20 into the can 10. The welding line of the laser may extend radially.

According to the embodiment, a welding heat shield member may be interposed between the second current collection plate 32 and the electrode assembly 20 to prevent welding heat of the sidewall member 11 and the cap 16, explained later, from affecting the separator 28 of the electrode assembly 20. The welding heat shield member may be an insulating member 18.

The insulating member 18 is preferably a material that is non-reactive with the electrolyte and has high heat resistance. The insulating member 18 may be a polymer material. The insulating member 18 may be polycarbonate (PC), polyethylene naphthalate (PEN), polyether ether ketone (PEEK), and polyethylene terephthalate (PET).

Referring to FIGS. 6, 7, and 16 to 20, the insulating member 18 is interposed between the second current collection plate 32 and the electrode assembly 20 in the axial direction.

The insulating member 18 may include an outer ring 181 and a centripetal extension portion 182 extending inwardly in the radial direction from the outer ring 181.

The centripetal extension portion 182 may extend inwardly a predetermined distance (d) from the radial outer edge of the insulating member 18.

The insulating member 18 may have an avoidance groove 185 formed by deleting a portion corresponding to the electrode tab connection portion 323 of the second current collection plate 32. Four avoidance grooves 185 may also be provided at 90-degree intervals to correspond to the second current collection plate of the embodiment.

In a state where the insulating member 18 is interposed between the second current collection plate 32 and the electrode assembly 20, the outer ring 181 of the insulating member 18 covers the outer ring 328 of the second current collection plate 32 and a part of the separation space 329, and the centripetal extension portion 182 of the insulating member 18 covers the second spoke 327 of the second current collection plate 32 and the remaining part of the separation space 329.

When the portion of the insulating member 18 that covers the outer ring 328 of the second current collection plate 32 is referred to as a circumferential extension cover portion 186, the circumferential extension cover portion 186 may be defined by a part of the outer ring 181.

Also, when the portion of the insulating member 18 that covers the second spoke 327 of the second current collection plate 32 is referred to as a radial extension cover portion 184, the radial extension cover portion 184 may be defined by a part of the centripetal extension portion 182.

In addition, when the portion of the insulating member 18 that covers the separation space 329 of the second current collection plate 32 is referred to as a separation space cover portion 183, the separation space cover portion 183 may be defined by the remaining part of the outer ring 181 and the remaining part of the centripetal extension portion 182.

In other words, the outer ring 328 of the second current collection plate 32 is covered by the outer ring 181 of the insulating member 18, the second spoke 327 of the second current collection plate 32 is covered by the centripetal extension portion 182 of the insulating member 18, and the separation space 329 of the second current collection plate 32 is covered by the outer ring 181 and the centripetal extension portion 182 of the insulating member 18.

The insulating member 18 is interposed between the second current collection plate 32 and the electrode assembly 20 in the axial direction, and in a state where the avoidance groove 185 of the insulating member 18 is aligned with the first spoke 326 or the electrode tab connection portion 323 of the second current collection plate 32, the first spoke 326 or the electrode tab connection portion 323 of the second current collection plate 32 is bonded to the electrode tab 27 of the second electrode 22 of the electrode assembly 20. This bonding may be achieved by irradiating a laser onto the surface of the electrode tab connection portion 323, and the laser may be irradiated in a manner of scanning in the radial direction. The laser scan may be performed multiple times, and may be performed at multiple locations spaced apart along the peripheral direction, respectively.

When welding the electrode tab connection portion 323, welding is performed while applying pressure to the first spoke 326 toward the electrode tab 27, so the first spoke 326 may be elastically deformed in the axial direction from the inner ring 321 and be in close contact with the electrode tab 27. Accordingly, the first spoke 326 or the electrode tab connection portion 323 may be fitted into the avoidance groove 185 of the insulating member 18.

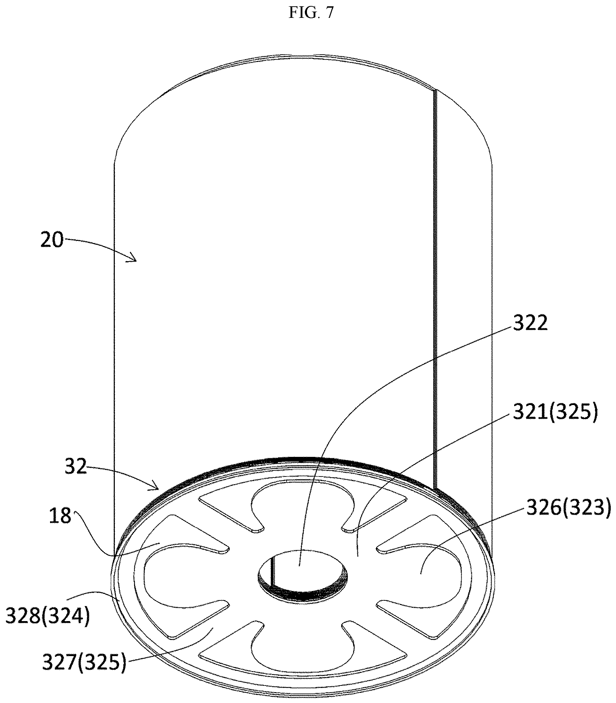

Then, since the peripheral surface of the first spoke 326 interferes with the peripheral surface of the avoidance groove 185, the position of the insulating member 18 is regulated as shown in FIG. 7 in a state where the electrode tab connection portion 323 and the electrode tab 27 of the electrode assembly 20 are welded.

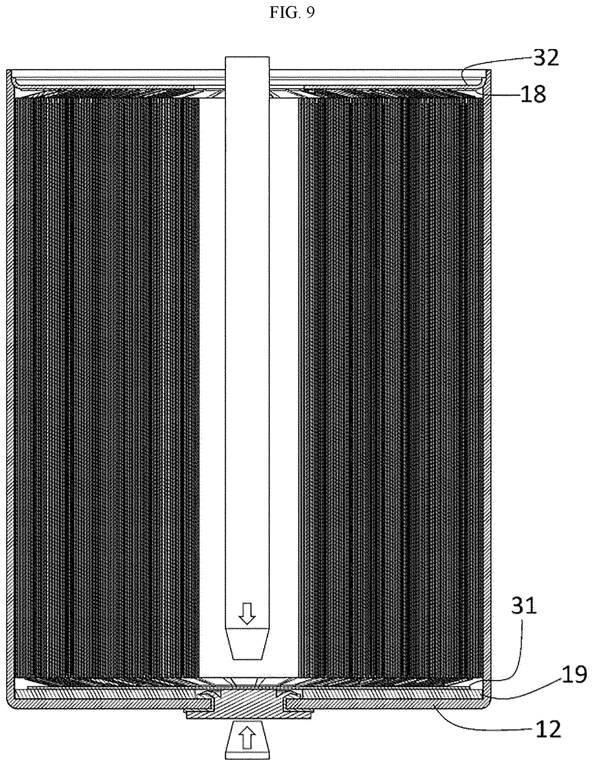

As shown in FIGS. 9 and 10, the electrode assembly 20 is accommodated in the can 10 in a state where the first current collection plate 31 is aligned to face the bottom member 12 of the can 10. At this time, an insulator 19 is interposed between the first current collection plate 31 and the bottom member 12 of the can 10 to electrically insulate the first current collection plate 31 and the bottom member 12.

In addition, the terminal connection portion 312 of the first current collection plate 31 is bonded to the first electrode terminal 13 fixed to the can 10 by resistance welding, ultrasonic welding, laser welding, or the like. A welding device for welding the first current collection plate 31 and the first electrode terminal 13 may approach the back surface of the center of the terminal connection portion 312 of the first current collection plate 31 through the winding center hollow of the electrode assembly 20 from the open end of the can 10 to perform welding. Of course, the first current collection plate 31 and the first electrode terminal 13 may also be bonded by brazing or soldering. In other words, various methods may be applied as long as the first current collection plate 31 and the first electrode terminal 13 can be electrically connected and fixed to each other.

In a state where the electrode assembly 20 is accommodated inside the can 10 and the first current collection plate 31 and the first electrode terminal 13 are bonded, the electrode tab 27 of the second electrode 22 and the second current collection plate 32 are arranged to face the open end of the sidewall member 11.

In this state, as shown in FIGS. 10 to 12, the open end of the can 10 is covered with the cap 16, and the edge of the cap 16 is welded to the edge of the sidewall member 11 and the second current collection plate 32. Also, an electrolyte is injected into the can 10 through the injection hole 162 of the cap 16.

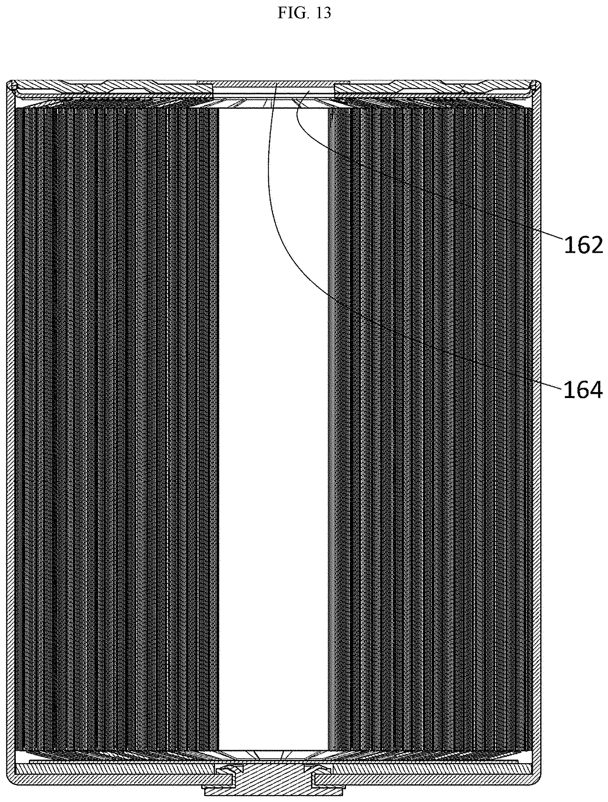

After injecting the electrolyte, as shown in FIG. 13, the battery cell is completely assembled by covering and sealing the injection hole 162 of the cap 16 with a plug 164.

Unlike the illustrated embodiment, in a structure in which an injection hole is not provided in the cap 16, the battery cell may be completely assembled by first injecting an electrolyte into the can 10 before covering the open end of the can 10 with the cap 16, then covering the open end of the can 10 with the cap 16, and welding the edge of the cap 16 to the edge of the sidewall member 11 and the second current collection plate 32.

As illustrated in FIG. 14, a portion where the edge of the sidewall member 11 and the edge of the cap 16 meet is exposed outward in the axial direction. A laser for seam-welding this portion may be irradiated to the portion where the edge of the sidewall member 11 and the edge of the cap 16 meet in the axial direction. In addition, the portion where the laser is irradiated may relatively move along the circumferential direction of the can 10 so that a welding portion W may be continuously formed.

In the battery cell, the welding portion W is formed at the abutment area of the sidewall member 11, the cap 16, and the second current collection plate 32.

As illustrated in FIG. 15, during the process of forming the welding portion W, the welding heat is conducted along the sidewall member 11 and also conducted along the second current collection plate 32.

The second current collection plate 32 may be made of a material having higher thermal conductivity than the sidewall member 11, such as copper. In addition, the second current collection plate 32 is in contact with the sidewall member 11. Therefore, when the welding heat generated in the sidewall member 11 by the laser is conducted along the axial direction of the sidewall member 11, it is distributed to the electrode assembly 20 through the second current collection plate 32, so that the welding heat is prevented from being conducted along the sidewall member 11 in the axial direction and transferred to the separator 28 at the outer circumference of the electrode assembly 20 facing the inner circumference of the sidewall member 11 and thereby damaging the separator 28 of the corresponding portion.

In addition, the welding heat conducted to the second current collection plate 32 moves along the outer ring 328, the second spoke 327, the inner ring 321, and the electrode tab connection portion 323 of the second current collection plate 32. Also, as the welding heat moves, its temperature gradually decreases. At this time, since the insulating member 18 is interposed between the outer ring 328 and the second spoke 327 of the second current collection plate 32, which have relatively high temperatures, and the electrode assembly 20, the high-temperature heat may be prevented from being transferred to the inside of the electrode assembly 20 through the electrode tab 27 and affecting the front axial end of the separator 28.

According to the embodiment, since the insulating member 18 extends a predetermined distance (d) from the outer radial edge, the inner ring 321 may not be covered. In addition, the insulating member 18 may be configured not to cover the electrode tab connection portion 323 by the avoidance groove 185. Since the temperature of the welding heat that reaches the inner ring 321 and the electrode tab connection portion 323 by conduction is relatively low, there is no concern that the heat transferred therefrom to the electrode assembly 20 will damage the separator 28.

Meanwhile, the insulating member 18 covers the separation space 329 of the second current collection plate 32 between the second current collection plate 32 and the electrode assembly 20. Accordingly, a portion of the electrode assembly 20 corresponding to the separation space 329 is covered by the insulating member 18.

Since the outer ring 328 of the second current collection plate 32 is very close to the area where welding heat is generated, there is a concern that heat radiated from the heated outer ring 328 may be transferred to the electrode assembly 20 corresponding to the above area through the separation space 329.

However, according to the embodiment, since the insulating member 18 covers the electrode assembly 20, the radiant heat is shielded so that the radiant heat does not damage the separator 28 of the electrode assembly 20.

Hereinafter, referring to FIG. 21, a method for manufacturing the above-described battery cell is described.

According to the method of manufacturing the battery cell, first, a can 10 in which a first electrode terminal 13 is fixed to a bottom member 12 is prepared, and an electrode assembly 20 in which a first current collection plate 31 and a second current collection plate 32 are respectively bonded to both axial ends is prepared. At this time, an insulating member 18 is interposed between the second current collection plate 32 and the electrode assembly 20.

In addition, the electrode assembly 20 is inserted and accommodated in the can 10 with the first current collection plate 31 facing the bottom member 12. Then, the second current collection plate 32 is positioned at the open end of the can 10. In the process of accommodating the electrode assembly 20 in the can 10, the radial outer edge of the second current collection plate 32 is brought into contact with the inner circumference of the sidewall member 11.

Next, the first current collection plate 31 and the first electrode terminal 13 are bonded.

In addition, the open end of the sidewall member 11 is covered with the cap 16, and the edge of the cap 16 is brought into contact with the inner circumference of the sidewall member 11 and the upper end of the edge of the second current collection plate 32.

Next, a laser is irradiated to the abutting portion of the inner circumference of the sidewall member 11 and the outer circumference of the cap 16, so that the sidewall member 11, the cap 16, and the can connection portion 324 of the second current collection plate 32 are welded together. Accordingly, the welding portion W bonds all of the sidewall member 11, the cap 16, and the second current collection plate 32.

At this time, the overhang portion 117 of the sidewall member 11, which protrudes further outward in the axial direction than the cap 16, is welded into the welding area of the inner circumference of the sidewall member 11 and the outer circumference of the cap 16 to secure a sufficient welding pool.

Even though the energy density of the laser is high, since the thermal conductivity of the second current collection plate 32 is higher, the high temperature heat may be prevented from being transmitted to the separator 28 at the outer circumference of the electrode assembly 20 through the sidewall member 11 and damaging the separator 28. In addition, since the insulating member 18 covers the electrode assembly 20, the welding heat transferred through the second current collection plate 32 does not affect the separator 28 of the electrode assembly 20.

After the seam welding is completed as above, an electrolyte is injected into the inside of the can 10 through the injection hole 162 of the cap 16.

After the electrolyte is completely injected, the injection hole 162 of the cap 16 is covered and sealed with a plug 164. Since the plug 164 may be sealed using a known technology, a detailed description is omitted.

Meanwhile, hereinafter, referring to FIG. 22, another embodiment of the method for manufacturing the above-described battery cell is described.

First, a can 10 in which a first electrode terminal 13 is fixed to a bottom member 12 is prepared, and an electrode assembly 20 in which a first current collection plate 31 and a second current collection plate 32 are respectively bonded to both axial ends is prepared. At this time, an insulating member 18 is interposed between the second current collection plate 32 and the electrode assembly 20.

In addition, the electrode assembly 20 is inserted and accommodated in the can 10 so that the first current collection plate 31 faces the bottom member 12. Then, the second current collection plate 32 is positioned at the open end of the can 10. In the process of accommodating the electrode assembly 20 in the can 10, the radial outer edge of the second current collection plate 32 is brought into contact with the inner circumference of the sidewall member 11.

Next, the first current collection plate 31 and the first electrode terminal 13 are bonded.

In this state, an electrolyte is injected into the can 10 through the open end of the can 10.

After the electrolyte is completely injected, the open end of the sidewall member 11 is covered with the cap 16, the edge of the cap 16 is brought into contact with the inner circumference of the sidewall member 11 and the upper end of the edge of the second current collection plate 32.

Next, a laser is irradiated to the abutting portion of the inner circumference of the sidewall member 11 and the outer circumference of the cap 16, so that the sidewall member 11, the cap 16, and the can connection portion 324 of the second current collection plate 32 are welded together. Accordingly, the welding portion W bonds all of the sidewall member 11, the cap 16, and the second current collection plate 32.

The battery cell 72 manufactured through the welding structure and the welding process described above may be accommodated in a housing 71 of a battery pack 70 as illustrated in FIG. 23. The battery pack 70 may be configured using a battery module, which is an intermediate form of assembly, or the battery pack 70 may be configured directly without a battery module as illustrated.

Since the battery cell 72 described above has a large volume in itself, there is no particular difficulty in implementing the battery pack 70 even without using an intermediate structure called a battery module. In addition, the battery cell 72 has lower internal resistance and higher energy density. Accordingly, the energy density of the battery pack 70 equipped with the battery cell 72 may be implemented even higher.

The battery pack 70 with increased energy density may store the same amount of energy while reducing its volume and load. Therefore, if the battery pack 70 to which the above battery cell 72 is applied is mounted on a vehicle such as a vehicle 80 that uses electricity as an energy source as shown in FIG. 24, the mileage of the vehicle per energy may be further increased.

It should be understood that the foregoing embodiments are illustrative in all respects and not restrictive, and the scope of the present disclosure will be defined by the appended claims rather than by the detailed description set forth above. Also, the meaning and scope of the appended claims, as well as all changes and modifications which can be derived from the equivalent concepts thereof, should be interpreted as being included within the scope of the present disclosure.

Although the present disclosure has been described with reference to the exemplified drawings, the present disclosure is not limited to the embodiments and drawings disclosed in this specification, and it is obvious that various modifications can be made by those skilled in the art within the scope of the technical idea of the present disclosure. In addition, even if the effects according to the configuration of the present disclosure are not explicitly described and explained while explaining the embodiments of the present disclosure, it is obvious that the effects that can be predicted by the configuration should also be acknowledged.

## Claims

1. A battery cell, which comprises a can including a bottom member, a sidewall member connected to the bottom member and extending to one side in an axial direction from the bottom member, and a cap covering an open end provided at one end of the sidewall member in the axial direction; and an electrode assembly accommodated inside the can,
wherein a current collection plate is connected to an electrode tab provided at a second end located at the open end of the can among first and second ends located at both axial sides of the electrode assembly,
wherein the current collection plate includes:
an electrode tab connection portion that is in contact with the electrode tab and electrically connected to the electrode tab;
a can connection portion that is provided outside the electrode tab connection portion in a radial direction and is in contact with the can and electrically connected to the can; and
a conductive connection portion that electrically connects the can connection portion and the electrode tab connection portion,
wherein a periphery of the one end of the sidewall member and an outer periphery of the cap in the radial direction are seam-welded along a peripheral direction, and
wherein at least a part of an insulating member is interposed between the current collection plate and the electrode assembly in the axial direction.

2. The battery cell according to claim 1,
wherein at least a part of the insulating member is disposed outside the electrode tab connection portion in the radial direction.

3. The battery cell according to claim 1,
wherein at least a part of the insulating member is disposed between two electrode tab connection portions adjacent in the peripheral direction.

4. The battery cell according to claim 1,
wherein at least a part of the insulating member is disposed between the can connection portion and the electrode assembly in the axial direction.

5. The battery cell according to claim 1,
wherein the insulating member covers a space between the electrode tab connection portion and the can connection portion in the radial direction.

6. The battery cell according to claim 1,
wherein the insulating member covers a space between the electrode tab connection portion and the conductive connection portion in the peripheral direction.

7. The battery cell according to claim 1,
wherein the insulating member is disposed to extend out of a space between the electrode tab connection portion and the electrode assembly in the axial direction.

8. The battery cell according to claim 1,
wherein the current collection plate includes:
a surrounding inner ring defining a hole facing a winding center hollow of the electrode assembly;
at least one first spoke and at least one second spoke extending outwardly in the radial direction from the inner ring and spaced apart from each other in a circumferential direction; and
an outer ring extending outside the inner ring in the radial direction to surround the inner ring,
wherein the outer ring is spaced apart from the first spoke and connected to the second spoke.

9. The battery cell according to claim 8,
wherein the outer ring has a closed loop shape.

10. The battery cell according to claim 8,
wherein the electrode tab connection portion is disposed at least on the first spoke,
wherein the conductive connection portion is disposed at least on the second spoke, and
wherein the can connection portion is disposed on the outer ring.

11. The battery cell according to claim 8,
wherein at least a part of the insulating member is disposed outside the first spoke in the radial direction.

12. The battery cell according to claim 8,
wherein at least a part of the insulating member is disposed between the first spokes in the peripheral direction.

13. The battery cell according to claim 8,
wherein at least a part of the insulating member is disposed between the second spoke and the electrode assembly in the axial direction.

14. The battery cell according to claim 8,
wherein at least a part of the insulating member is disposed between the outer ring and the electrode assembly in the axial direction.

15. The battery cell according to claim 8,
wherein the insulating member is disposed to extend out of a space between the first spoke and the electrode assembly in the axial direction.

16. The battery cell according to claim 8,
wherein the insulating member covers a space between the first spoke and the outer ring in the radial direction.

17. The battery cell according to claim 8,
wherein the insulating member covers a space between the first spoke and the second spoke in the peripheral direction.

18. The battery cell according to claim 8,
wherein the insulating member covers a space between the inner ring and the outer ring in the radial direction.

19. The battery cell according to claim 1,
wherein the insulating member contains a high heat-resistant polymer material.

20. The battery cell according to claim 19,
wherein the insulating member is substantially chemically stable to an electrolyte injected into the can.

21. The battery cell according to claim 19,
wherein the insulating member is substantially non-reactive with an electrolyte.

22. The battery cell according to claim 19,
wherein the insulating member contains at least one of PC, PEN, PEEK, and PET.
